# EUROPEAN PATENT SPECIFICATION

(11) **EP 0 654 587 B1**
(45) Date of publication and mention of the grant of the patent: **20.01.1999**
(21) Application number: 94308486.3
(22) Date of filing: 16.11.1994
(51) Int. Cl.: F01D 17/14, F02B 37/12

(54) **Turbine with variable inlet geometry**
Turbine mit variabler Einlassgeometrie
Turbine avec entrée à géométrie variable

(30) Priority: 19.11.1993 GB 9323840
(43) Date of publication of application: 24.05.1995
(73) Proprietor: HOLSET ENGINEERING COMPANY LIMITED, Huddersfield, HD1 6RA (GB)
(72) Inventor: Parker, John Frederick, Huddersfield HD1 6RA (GB); Garrett, Stephen Edward, Huddersfield HD1 6RA (GB)
(74) Representative: Allman, Peter John

(56) References cited:
- EP-A- 0 093 462
- EP-A- 0 131 406
- DE-A- 1 913 048
- GB-A- 1 106 107
- US-A- 3 426 964
- US-A- 4 403 914
- US-A- 5 044 880

## Description

The present invention relates to a variable geometry turbine, particularly, but not exclusively, for use in an internal combustion engine.

Turbines generally comprise a turbine wheel mounted in a turbine chamber, an inlet passageway extending radially inwards towards the turbine chamber, an inlet chamber arranged around the radially outer end of the inlet passageway, and an outlet passageway extending axially from the turbine chamber. The passageways and chamber communicate such that pressurised gas admitted to the inlet chamber flows through the inlet passageway to the outlet passageway via the turbine chamber, thereby driving the turbine wheel. In the case of a turbo charger for an internal combustion engine, the turbine wheel drives a shaft which in turn drives a rotary compressor.

In a variable geometry turbine, one wall of the inlet passageway is provided by a moveable wall member the position of which is adjustable, relative to a facing wall of the inlet passageway, to control the width of the inlet passageway. A variety of actuation mechanisms, including hydraulic and mechanical, have been proposed to control the position of the moveable wall member.

For example, US patent number 5,044,880 describes a variable geometry turbine in which the moveable wall member is annular and formed from a sheet material, and is mounted within an annular cavity in the turbine housing. The wall member has a tubular portion extending from the radially outermost periphery of the wall member and away from the way from the facing wall of the housing. A gas tight seal is disposed between the tubular portion and the turbine housing to prevent gas leaking from the inlet passageway to the space behind the annular wall member. Such leakage would impair the efficiency of the turbine.

US patent number 4,403,914 discloses a variable geometry device for use in a turbine engine having a support housing, a rotor contained within the support housing and a pair of spaced walls forming an annular and radially extending passageway open at one end to the rotor. An annular recessed channel is formed in one of the support housing walls while a ring is mounted within the channel and moveable between a retracted position in which the ring is nested within the channel and an extended position in which the ring protrudes transversely into and variably restricts the passageway so that the restriction of the fluid passageway is substantially proportional to the transverse position of the ring.

In a variable geometry turbine, when the volume of exhaust gas being delivered to the turbine is relatively low, the velocity of the gas reaching the turbine is maintained at a level which ensures efficient turbine operation by narrowing the annular inlet passageway. Vanes extending across the inlet passageway direct the gas flow into the wheel. As the passageway narrows, for any given volume of gas flow, the speed of the inlet gas passing through the inlet passageway increases. Thus the radial pressure gradient across the face of the moveable wall member, from its upstream periphery to its downstream periphery, increases as the passageway narrows. Assuming that the radially outer edge of the moveable wall member is sealed to prevent gas leaking behind the wall member, the pressure behind the wall member will be lower than the pressure on the radially outer portions of the face of the moveable wall member. This pressure difference results in high loads on the wall member. For example, in a turbine for a ten litre internal combustion engine, a load of 80kg can be applied to the moveable wall member when the passageway width is a minimum. When braking, the pressure difference can be as high as 5 bar, resulting in a level as high as 200kg. These loads must be borne by the actuation system.

In addition to the disadvantageous effect on the control of the position of the moveable wall member, the high loads produced on the face of the wall member can increase wear and increase the complexity and cost of the overall turbine which must be constructed to handle the high loads produced.

British patent application GB-A-1106107 and German patent application DE-A-1913048 disclose a moveable wall of a turbo engine, which wall is provided with an aperture between the passageway and a cavity behind the wall member. The aperture is provided in an attempt to avoid the loads of up to 200kg being exerted on the wall member. However, the positional stability of the moveable wall is compromised by the fact that a resultant pressure may be exerted on either side of the wall, since unavoidable 'slack' in the positioning of the wall will result in its movement when the resultant pressure changes direction. The apertures in both GB-A-1106107 and DE-A-1913048 are provided in outlet passageways.

It is an object of the present invention to provide a variable geometry turbine which obviates or mitigates the above disadvantages.

According to the present invention there is provided a variable geometry turbine comprising a turbine wheel supported in a housing, an annular inlet passageway extending radially inwards towards the turbine wheel, wherein the annular inlet passageway is defined between an annular wall of a moveable wall member and a facing wall of the housing, the moveable wall member is moveable relative to the housing to vary the width of the inlet passageway, the moveable wall member is mounted within an annular cavity provided within the housing, radially inner and outer peripheries of the moveable wall member are sealed with respect to the cavity, characterised in that apertures are provided through said annular wall of the wall member whereby the cavity is in fluid communication with the inlet passageway, and said apertures are arranged such that in use a resultant force is exerted on the moveable wall member which force is always in a single axial direction.

As discussed above, in relation to the prior art, the increase in overall load on the face of the moveable wall member as the inlet passageway is closed is due to an increase in the radial pressure gradient across the face of the moveable wall defining the inlet passageway. In the present invention the provision of apertures through the moveable wall allows inlet gas to pass through the wall member into cavity in the housing. The pressure of the gas within the cavity. which will be substantially equal to the pressure acting on the face of the moveable wall at the location of the apertures, reduces the overall pressure difference across the wall and thus reduces the resultant load on the wall member.

It is important that the moveable wall member is sealed with respect to the housing so that the cavity in the housing is sealed off from the inlet passageway except through the apertures provided in the wall member. This ensures that the pressure of the gas within the cavity is substantially equal to the static pressure acting on the face of the moveable wall at the location of the apertures. For instance if there is no seal between the inner radial edge of the moveable wall and the cavity, the pressure within the cavity will be substantially equal to the downstream pressure of the inlet gas and the load reducing effect will be lost.

The potential stability of the moveable wall is not compromised by changes in the resultant pressure, since the resultant force on the moveable wall is always in one axial direction.

The moveable wall member is provided with inner and outer annular flanges extending axially from the radially innermost and outermost peripheries of the wall member and in a direction away from said facing wall, and seals are disposed between the flanges and inner and outer surfaces of the cavity.

Preferably at least one seal is supported within an annular groove provided in an internal surface of the cavity.

Preferably at least one seal is supported within an annular groove provided in the radially outer periphery of the moveable wall member.

In a preferred embodiment of the present invention, the moveable wall member supports vanes which extend into the inlet passageway and said apertures are provided between adjacent vanes.

Preferably the said facing wall of the turbine housing is provided with an annular recess to receive said vanes as the annular wall member is moved towards the facing wall.

The annular recess is preferably covered by a cover provided with slots to receive said vanes.

A specific embodiment of the present invention will now be described, by way of example, with reference to the accompanying drawings, in which:
Figure 1 is an axial cross-section of a variable geometry turbine in accordance with the present invention; and
Figure 2 is a cross section of a part of the turbine of Figure 1 showing the moveable wall member in a different position to that shown in Figure 1.

Referring to the drawings, the illustrated variable geometry turbine comprises a turbine housing 1 defining a volute or inlet chamber 2 to which gas from an internal combustion engine (not shown) is delivered. The exhaust gas flows from the inlet chamber 2 to an outlet passageway 3 via an annular inlet passageway 4 defined on one side by the face of a movable annular wall member 5 and on the opposite side by an annular shroud 6 which covers the opening of an annular recess 7 defined in the facing wall of the housing 1.

The movable annular wall member 5 supports an array of circumferentially spaced vanes each of which extends across the inlet passageway, through a suitably configured slot in the shroud 6, and into the recess 7.

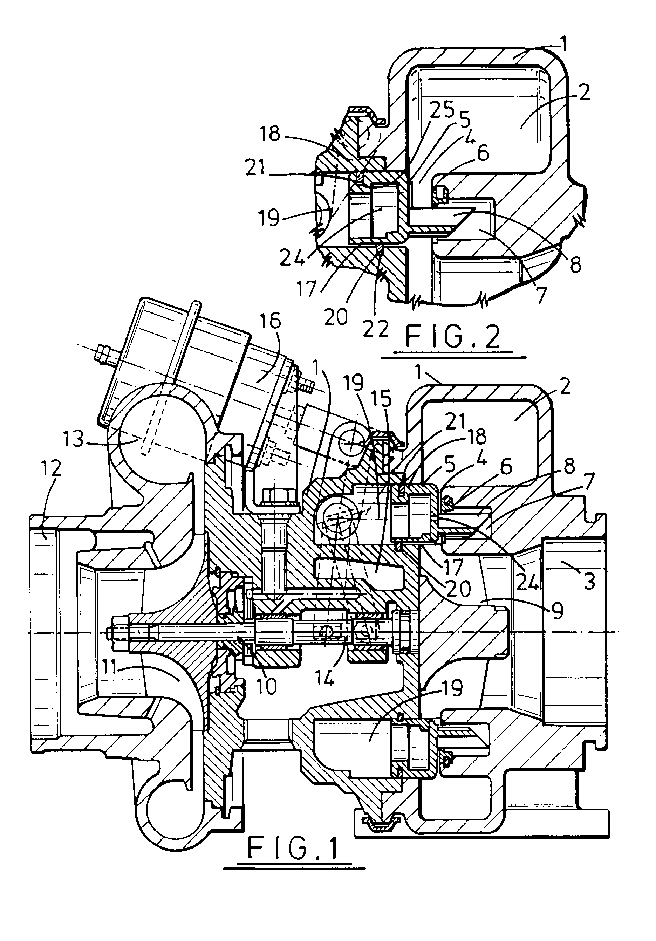

Gas flowing from the inlet chamber 2 to the outlet passageway 3 passes over a turbine wheel 9 and as a result torque is applied to a turbocharger shaft 10 which drives a compressor wheel 11. Rotation of the compressor wheel 11 pressurises ambient air present in an air inlet 12 and delivers the pressurised air to an air outlet or volute 13 from which it is fed to an internal combustion engine (not shown). The speed of the turbine wheel 9 is dependent upon the velocity of the gas passing through the annular inlet passageway 4. For a fixed rate of flow of gas, the gas velocity is a function of the width of the inlet passageway 4, which can be adjusted by controlling the axial position of the movable wall member 5. In the drawings, Fig. 1 shows the annular inlet passageway closed down to a minimum width whereas in Fig. 2 the inlet passageway is shown fully open. As the width of the inlet passageway 4 is reduced the velocity of the gas passing through it increases.

Movement of the annular wall member 5 may be controlled by any suitable actuation means such as, for instance, that disclosed in U.S. Patent No. 5,044,880. In the illustrated example the actuation mechanism is based substantially on that of the aforementioned U.S. patent the movable wall member 5 being mounted on axially extending pins 14 (only one of which is shown in the drawings) the position of which is controlled by a stirrup member 15 (shown in dotted line) which is linked to a pneumatically operated actuator 16. Further details of the actuator system will not be discussed here as they are not relevant to the subject of the present invention.

The movable annular wall member 5 has axially extending inner and outer annular flanges 17 and 18 respectively which extend into an annular cavity 19 provided in the turbine housing. Inner and outer sealing rings, 20 and 21 respectively, are provided to seal the wall member 5 with respect to inner and outer annular surfaces of the annular cavity 19 whilst allowing the annular wall member 5 to slide within the annular cavity 19. The inner sealing ring 20 is supported within an annular groove 22 formed in the inner surface of the cavity 19 and bears against the inner annular flange 17 of the wall member 5, whereas the outer sealing ring 21 is supported within an annular groove 23 provided within the annular flange 18 of the wall member 5 and bears against the radially outermost internal surface of the cavity 19. It will be appreciated that the inner sealing ring 20 could be mounted in an annular groove in the flange 17 rather than as shown. Such an arrangement might make assembly easier.

The wall member 5 is provided with a number of apertures 24 disposed between adjacent pairs of vanes 8 by means of which the face of the wall member 5 which defines the annular inlet passageway 4 is in fluid communication with the cavity 19, which is otherwise sealed off from the inlet passageway 4 by the sealing rings 20 and 21.

When in use with exhaust gas passing through the inlet passageway 4, static pressure will be applied to the face of the annular wall member 5 tending to force the annular wall member 5 into the cavity 19. The effect of this pressure must be overcome by the actuating mechanism if the position of the wall member 5 is to be accurately controlled. Moving the wall member 5 closer to the facing wall 6 of the housing, so as to further reduce the width of the annular passageway 4 and increase the speed of the air flowing through the annular inlet passageway 4, tends to increase the load applied to the face of the wall member 5. However, the provision of the apertures 24 through the wall member 5 ensures that the pressure in the cavity 19 is equal to the static pressure applied to the face of the wall member 5 at the location of the apertures 24, and thus by appropriate positioning of the apertures 24 the resultant load on the wall member may be significantly reduced.

The load reducing effect of the apertures 24 will depend upon their size and number and exact location and may be varied for different applications and where the turbines have different characteristics.

A further consideration which is preferably taken into account when selecting the disposition of the apertures 24 is that it is undesirable for the pressure difference across the wall member 5 to change from a resultant in one axial direction to a resultant in the opposite axial direction as this might cause instability in the control of the position of the wall member 5. It will be appreciated that as the moveable wall member moves relative to the housing the pressure within the cavity 19 will not precisely track the load applied by the gas in the variable inlet passageway 4. It is preferable to locate the apertures 24 such that the resultant force on the moveable member 5 is always in one axial direction, even if as a result the resultant force is not minimised.

Alternative sealing means to those illustrated may be provided to seal the movable wall member within the cavity. More than one seal may be provided between either the inner or outer peripheries of the wall member 5 and the housing 1. The seals may be for example piston ring type seals of rectangular cross section with a gap in their circumference so that they can expand or contract into a suitable groove. Alternatively, the seals may be double wound seals forming a spring-like structure. The seals may be inspringing so as to be suitable for location in a groove in an inwardly facing surface, or outspringing so as to be suitable for location in a groove in an outwardly facing surface.

## Claims

1. A variable geometry turbine comprising a turbine wheel (9) supported in a housing (1), and an annular inlet passageway (4) extending radially inwards towards the turbine wheel (9), wherein the annular inlet passageway (4) is defined between an annular wall of a moveable wall member (5) and a facing wall (6) of the housing (1), the moveable wall member (5) is moveable relative to the housing (1) to vary the width of the inlet passageway (4), the moveable wall member (5) is mounted within an annular cavity (19) provided within the housing (1), radially inner and outer peripheries of the moveable wall member (5) are sealed with respect to the cavity (19), characterised in that apertures (24) are provided through said annular wall of the wall member (5) whereby the cavity (19) is in fluid communication with the inlet passageway (4), and said apertures (24) are arranged such that in use a resultant force is exerted on the moveable wall member (5) which force is always in a single axial direction.

2. A variable geometry turbine according to claim 1, wherein the moveable wall member (5) is provided with inner and outer annular flanges (17, 18) extending axially from the radially innermost and outermost peripheries of the wall member (5) and in a direction away from said facing wall (6), and seals (20, 21) are disposed between the flanges (17, 18) and inner and outer surfaces of the cavity (19).

3. A variable geometry turbine according to claim 1 or 2, wherein at least one seal (20) is supported within an annular groove (22) provided in an internal surface of the cavity (19).

4. A variable geometry turbine according to any preceding claim, wherein at least one seal (21) is supported within an annular groove (23) provided in the radially outer periphery of the moveable wall member (5).

5. A variable geometry turbine according to claim 1, wherein the moveable wall member (5) supports vanes (8) which extend into the inlet passageway (4) and said apertures (24) are provided between adjacent vanes (8).

6. A variable geometry turbine according to claim 5, wherein the said facing wall (6) of the turbine housing (1) is provided with an annular recess (7) to receive said vanes (8) as the moveable wall member (5) is moved towards the facing wall.

7. A variable geometry turbine according to claim 6, wherein said annular recess (7) is covered by a cover (6) provided with slots to receive said vans (8).

## Patentansprüche

1. Turbine mit veränderlicher Geometrie, die ein Turbinenrad (9), das in einem Gehäuse (1) getragen wird, und einen ringförmigen Einlaßdurchgang (4) umfaßt, der sich radial nach innen auf das Turbinenrad (9) zu erstreckt, und bei der der ringförmige Einlaßdurchgang (4) zwischen einer ringförmigen Wand eines bewegbaren Wandglieds (5) und einer gegenüberliegenden Wand (6) des Gehäuses (1) definiert ist, das bewegbare Wandglied (5) relativ zum Gehäuse (1) bewegbar ist, um die Breite des Einlaßdurchgangs (4) zu verändern, das bewegbare Wandglied (5) innerhalb eines ringförmigen Hohlraums (19) angebracht ist, der innerhalb des Gehäuses (1) bereitgestellt wird, radial innere und äußere Randbereiche des bewegbaren Wandglieds (5) bezüglich des Hohlraums (19) abgedichtet sind, dadurch gekennzeichnet, daß Öffnungen (24) durch die ringförmige Wand des Wandglieds (5) bereitgestellt werden, wodurch der Hohlraum (19) in Fluidverbindung mit dem Einlaßdurchgang (4) steht, und die Öffnungen (24) so angeordnet sind, daß beim Einsatz eine resultierende Kraft auf das bewegbare Wandglied (5) ausgeübt wird, wobei diese Kraft stets in einer einzigen axialen Richtung liegt.

2. Turbine mit veränderlicher Geometrie nach Anspruch 1, bei der das bewegbare Wandglied (5) mit einem inneren und einem äußeren ringförmigen Flansch (17, 18) versehen ist, die sich axial von den radial am weitesten innen und den radial am weitesten außen gelegenen Randbereichen des Wandglieds (5) erstrecken, und zwar in einer von der Wand (6) wegweisenden Richtung, und zwischen den Flanschen (17, 18) und den inneren und äußeren Oberflächen des Hohlraums (19) Dichtungen (20, 21) angeordnet sind.

3. Turbine mit veränderlicher Geometrie nach Anspruch 1 oder 2, bei der mindestens eine Dichtung (20) innerhalb einer ringförmigen Rinne (22) getragen wird, die in einer inneren Oberfläche des Hohlraums (19) bereitgestellt wird.

4. Turbine mit veränderlicher Geometrie nach einem der vorhergehenden Ansprüche, bei der mindestens eine Dichtung (21) in einer ringförmigen Rinne (23) getragen wird, die in dem radial äußeren Randbereich des bewegbaren Wandglieds (5) bereitgestellt wird.

5. Turbine mit veränderlicher Geometrie nach Anspruch 1, bei der das bewegbare Wandglied (5) Schaufeln (8) trägt, die sich in den Einlaßdurchgang (4) erstrecken, und die Öffnungen (24) zwischen nebeneinanderliegenden Schaufeln (8) bereitgestellt werden.

6. Turbine mit veränderlicher Geometrie nach Anspruch 5, bei der die gegenüberliegende Wand (6) des Turbinengehäuses (1) mit einer ringförmigen Vertiefung (7) versehen ist, um die Schaufeln (8) aufzunehmen, während das bewegbare Wandglied (5) auf die gegenüberliegende Wand zu bewegt wird.

7. Turbine mit veränderlicher Geometrie nach Anspruch 6, bei der die ringförmige Vertiefung (7) von einer Abdeckung (6) überdeckt wird, die mit Schlitzen versehen ist, um die Schaufeln (8) aufzunehmen.

## Revendications

1. Turbine à géométrie variable comprenant une roue de turbine (9) supportée dans un logement (1) et un passage d'entrée annulaire (4) s'étendant en direction radiale vers l'intérieur dans la direction de la roue de turbine (9), dans laquelle le passage d'entrée annulaire (4) est défini entre une paroi annulaire d'un élément de paroi mobile (5) et une paroi frontale (6) du logement (1); l'élément de paroi mobile (5) est mobile par rapport au logement (1) pour faire varier la largeur du passage d'entrée (4); l'élément de paroi mobile (5) est monté dans une cavité annulaire (19) prévue dans le logement (1); les périphéries interne et externe en direction radiale de l'élément de paroi mobile (5) sont étanchées par rapport à la cavité (19); caractérisée en ce que des orifices (24) sont pratiqués à travers ladite paroi annulaire de l'élément de paroi (5) pour établir une communication de fluide entre la cavité (19) et le passage d'entrée (4), lesdits orifices (24) étant arrangés de telle sorte que, en état de marche, une force résultante s'exerce sur l'élément de paroi mobile (5), ladite force s'exerçant toujours dans une seule direction axiale.

2. Turbine à géométrie variable selon la revendication 1, dans laquelle l'élément de paroi mobile (5) est muni de brides annulaires interne et externe (17, 18) s'étendant en direction axiale depuis les périphéries de l'élément de paroi (5) situées le plus à l'intérieur et le plus à l'extérieur en direction radiale et dans une direction s'écartant de ladite paroi frontale (6), des joints étanches (20, 21) étant disposés entre les brides (17, 18) et les surfaces interne et externe de la cavité (19).

3. Turbine à géométrie variable selon la revendication 1 ou 2, dans laquelle au moins un joint étanche (20) est supporté dans une rainure annulaire (22) pratiquée dans la surface interne de la cavité (19).

4. Turbine à géométrie variable selon l'une quelconque des revendications précédentes, dans laquelle au moins un joint étanche (21) est supporté dans une rainure annulaire (23) pratiquée dans la périphérie externe en direction radiale de l'élément de paroi mobile (5).

5. Turbine à géométrie variable selon la revendication 1, dans laquelle l'élément de paroi mobile (5) supporte des aubes fixes (8) qui s'étendent jusque dans le passage d'entrée (4), lesdits orifices (24) étant prévus entre des aubes fixes adjacentes (8).

6. Turbine à géométrie variable selon la revendication 5, dans laquelle ladite paroi frontale (6) du logement de turbine (1) est munie d'un évidement annulaire (7) dans lequel viennent se loger lesdites aubes fixes (8) lorsque l'élément de paroi mobile (5) se déplace en direction de la paroi frontale.

7. Turbine à géométrie variable selon la revendication 6, dans laquelle ledit évidement annulaire (7) est recouvert à l'aide d'un recouvrement (6) muni de fentes pour la réception desdites aubes fixes (8).
